# EUROPEAN PATENT APPLICATION

(11) **EP 4 832 620 A1**
(43) Date of publication of application: **28.10.2026**
(21) Application number: 24917327.9
(22) Date of filing: 18.12.2024
(51) Int. Cl.: H04W 72/0457, H04W 72/0453, H04L 5/00, H04W 52/02, H04W 84/12

(54) **APPARATUS AND METHOD FOR EXPANDING FREQUENCY BAND DURING POWER SAVING OPERATION IN WIRELESS LAN SYSTEM**

(30) Priority: 10.01.2024 KR 20240004192
(71) Applicant: Hyundai Motor Company, Seoul 06797 (KR); Kia Corporation, Seoul 06797 (KR); KOREA NATIONAL UNIVERSITY OF TRANSPORTATION INDUSTRY-ACADEMIC COOPERATION FOUNDATION, Chungju-si, Chungcheongbuk-do 27469 (KR)
(72) Inventor: KIM, Yong Ho, Incheon 22003 (KR); LEE, Gwang Ho, Hwaseong-si Gyeonggi-do 18416 (KR); MOON, Ju Seong, Osan-si Gyeonggi-do 18101 (KR); AHN, Woo Jin, Anyang-si Gyeonggi-do 14038 (KR)
(74) Representative: Isarpatent
(86) International application number: PCT/KR2024/020631
(87) International publication number: WO 2025/150732

(57) **Abstract**

The present disclosure relates to frequency bandwidth expansion during a power saving operation in a WLAN system, and a method for operating a station (STA) in the WLAN system includes: obtaining information associated with a power saving operation of an access point (AP); transmitting information associated with band expansion that is an operation for transmitting data by using a channel used in the power saving operation and at least one additional channel; and transmitting data based on at least one of the information associated with the band expansion or the information associated with the power saving operation, wherein the information associated with the power saving operation includes information on a time required for switching an operating channel of the AP, and the information associated with the band expansion includes information indicating the at least one additional channel.

## Description

### Technical Field

The present disclosure relates to a wireless local area network (WLAN) system. More particularly, the present disclosure relates to a device and method for expanding a frequency band during a power saving operation in a WLAN system.

### Background Art

Recently, as the spread of mobile devices expands, a wireless local area network technology capable of providing fast wireless communication services to mobile devices is in the spotlight. The wireless local area network (LAN) technology may be a technology that supports mobile devices such as smart phones, smart pads, laptop computers, portable multimedia players, embedded devices, and the like to wirelessly access the Internet based on wireless communication technology.

With the emergence of applications requiring higher throughput and applications requiring real-time transmission, the IEEE 802.11be standard, which is an Extreme High Throughput (EHT) WLAN technology, is being developed. A goal of the IEEE 802.11be standard may be to support a high throughput of 30 Gbps. The IEEE 802.11be standard may support a technology for reducing transmission delay. In addition, the IEEE 802.11be standard may support a further expanded frequency bandwidth (e.g., 320 MHz bandwidth), multi-link transmission and aggregation operations including an operation using multiple bands, multi-access point (AP) transmission operations, and/or efficient retransmission operations (e.g., Hybrid Automatic Repeat Request (HARQ) operations).

Meanwhile, the technologies that are described in the Background section are written to improve the understanding of the background of the present disclosure and may include content that is not already known to those of ordinary skill in the art to which the present disclosure belongs.

### Description of Invention

### Technical Problem

The present disclosure is directed to providing a method and apparatus for increasing a data transmission rate of an AP performing a power saving operation in a WLAN system.

The present disclosure is directed to providing a method and apparatus for expanding a bandwidth on which an AP performing a power saving operation performs communication in a WLAN system.

The present disclosure is directed to providing a method and apparatus for expanding a bandwidth of an AP by using a frame transmitted by a station (STA) in a WLAN system.

The present disclosure is directed to providing a method and apparatus for performing communication using a temporarily expanded bandwidth with an AP performing a power saving operation in a WLAN system.

Technical problems to be achieved by the present disclosure are not limited to the technical problems mentioned above, and other technical problems not mentioned may be clearly understood by a person of ordinary skill in the art to which the present disclosure pertains from the description below.

### Technical Solution

A method for operating an STA in a WLAN system includes: obtaining information associated with a power saving operation of an AP; transmitting information associated with band expansion that is an operation for transmitting data by using a channel used in the power saving operation and at least one additional channel; and transmitting data based on at least one of the information associated with the band expansion or the information associated with the power saving operation, wherein the information associated with the power saving operation includes information on a time required for switching an operating channel of the AP, and the information associated with the band expansion includes information indicating the at least one additional channel.

A method for operating an AP in a WLAN system includes: transmitting information associated with a power saving operation; receiving information associated with band expansion that is an operation for transmitting data by using a channel used in the power saving operation and at least one additional channel; and switching an operating channel based on the information associated with the band expansion; and receiving data based on at least one of the information associated with the band expansion or the information associated with the power saving operation, wherein the information associated with the power saving operation includes information on a time required for switching the operating channel, and the information associated with the band expansion includes information indicating the at least one additional channel.

An STA in a WLAN system includes a transceiver and a processor coupled to the transceiver, wherein the processor is configured to: obtain information associated with a power saving operation of an AP; transmit information associated with band expansion that is an operation for transmitting data by using a channel used in the power saving operation and at least one additional channel; and transmit data based on at least one of the information associated with the band expansion or the information associated with the power saving operation, the information associated with the power saving operation includes information on a time required for switching an operating channel of the AP, and the information associated with the band expansion includes information indicating the at least one additional channel.

An AP in a WLAN system includes a transceiver and a processor coupled to the transceiver, wherein the processor is configured to: transmit information associated with a power saving operation; receive information associated with band expansion that is an operation for transmitting data by using a channel used in the power saving operation and at least one additional channel; switch an operating channel based on the information associated with the band expansion; and receive data based on at least one of the information associated with the band expansion or the information associated with the power saving operation, the information associated with the power saving operation includes information on a time required for switching the operating channel, and the information associated with the band expansion includes information indicating the at least one additional channel for transmitting the data.

### Advantageous Effects

According to the present disclosure, communication with an AP performing a power saving operation may be performed using a channel used in the power saving operation and another channel.

According to the present disclosure, an AP performing a power saving operation may perform communication using an additional channel.

According to the present disclosure, communication with an AP performing a power saving operation may be performed using a wide frequency band.

Effects obtained in the present disclosure are not limited to the above-mentioned effects, and other effects not mentioned above may be clearly derived and understood by those skilled in the art, to which a technical configuration of the present disclosure is applied, from the following description of embodiments of the present disclosure. That is, effects, which are not intended when implementing a configuration described in the present disclosure, may also be derived by those skilled in the art from the embodiments of the present disclosure.

### Description of Drawings

FIG. 1 is a block diagram illustrating a first embodiment of a communication node constituting a WLAN system.
FIG. 2 illustrates a first embodiment of a bandwidth expansion method of an AP performing a power saving operation.
FIG. 3 illustrates a second embodiment of a bandwidth expansion method of an AP performing a power saving operation.
FIG. 4 illustrates a third embodiment of a bandwidth expansion method of an AP performing a power saving operation.
FIG. 5 illustrates a fourth embodiment of a bandwidth expansion method of an AP performing a power saving operation.
FIG. 6A illustrates a fifth embodiment of a bandwidth expansion method of an AP performing a power saving operation.
FIG. 6B illustrates a sixth embodiment of a bandwidth expansion method of an AP performing a power saving operation.
FIG. 7 illustrates a seventh embodiment of a bandwidth expansion method of an AP performing a power saving operation.
FIG. 8 illustrates a flowchart of a communication procedure during a power saving operation according to an embodiment of the present disclosure.
FIG. 9 illustrates a flowchart of a communication procedure during a power saving operation according to an embodiment of the present disclosure.
FIG. 10 illustrates a flowchart of a band expansion procedure according to an embodiment of the present disclosure.
FIG. 11 illustrates a flowchart of a band expansion procedure according to an embodiment of the present disclosure.
FIG. 12 illustrates a flowchart of a band expansion procedure according to an embodiment of the present disclosure.
FIG. 13 illustrates a flowchart of a band expansion procedure according to an embodiment of the present disclosure.

### Mode for Invention

The present disclosure may have various modifications and embodiments, and specific embodiments are illustrated in the drawings and described in detail in the detailed description. However, this is not intended to limit the present disclosure to specific embodiments, but should be understood to include all modifications, equivalents, or substitutes included in the spirit and technical scope of the present disclosure.

The terms first, second, etc. may be used to describe various components, but the components should not be limited by the terms. The terms are only used for the purpose of distinguishing one component from another. For example, without departing from the scope of the present disclosure, the first component may be referred to as the second component, and similarly, the second component may also be referred to as the first component. The term and/or includes a combination of a plurality of related described items or any item among a plurality of related described items.

When it is said that a component is 'coupled with/to' or 'connected to' another component, it should be understood that the one component is connected to the other component directly or through any other component in between. On the other hand, when it is said that a component is 'directly connected to' or 'directly coupled to' another component, it should be understood that there is no other component between the components.

The terminology used in the present disclosure is only used to describe specific embodiments and is not intended to limit the present disclosure. The singular expression includes the plural expression unless the context clearly indicates otherwise. In the present disclosure, terms such as "include" or "have" are intended to specify the presence of a feature, number, step, operation, component, part or combination thereof described in the specification, but should be understood not to exclude in advance the possibility of the presence or addition of one or more other features, numbers, steps, operations, components, parts or combinations thereof.

Unless otherwise defined, all terms used herein, including technical or scientific terms, have the same meaning as commonly understood by one of ordinary skill in the art to which this invention pertains. Terms defined in commonly used dictionaries should be interpreted as having a meaning consistent with their meaning in the context of the relevant technology, and will not be interpreted in an idealized or overly formal sense unless explicitly defined herein.

Hereinafter, with reference to the attached drawings, various exemplary embodiments of the present invention will be described in more detail. In order to facilitate an overall understanding in describing the present invention, identical reference numerals are used for identical components in the drawings, and redundant descriptions of identical components are omitted.

Below, a wireless communication system to which embodiments of the present invention are applied will be described. The wireless communication system to which embodiments of the present invention are applied is not limited to the description below, and embodiments of the present invention can be applied to various wireless communication systems. The wireless communication system may be referred to as a "wireless communication network."

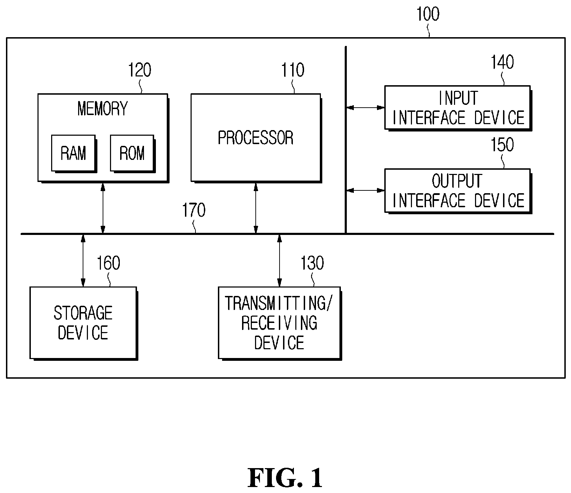

FIG. 1 illustrates a block diagram of a communication node in a WLAN system.

Referring to FIG. 1, a communication node 100 may be an access point (AP), a station (STA), an AP multi-link device (MLD), or a non-AP MLD. A STA may be a non-AP STA. An operating channel width supported by an AP may be 20 MHz, 80 MHz, or 160 MHz. An operating channel width supported by a STA may be 20 MHz or 80 MHz.

The communication node 100 may include at least one processor 110, a memory 120, and at least one transmitting/receiving device 130 that is connected to a network and performs communication. The transmitting/receiving device 130 may also be referred to as a transceiver, a radio frequency (RF) unit, or a RF module. In addition, the communication node 100 may further include an input interface device 140, an output interface device 150, and a storage device 160. Components included in the communication node 100 may be connected by a bus 170 and perform communication between them.

However, each component included in the communication node 100 may be connected not by the common bus 170 but by an individual interface or individual bus around the processor 110. For example, the processor 110 may be connected to at least one of the memory 120, the transmitting/receiving device 130, the input interface device 140, the output interface device 150, and the storage device 160 through a dedicated interface.

The processor 110 may execute a program command stored in at least one of the memory 120 and the storage device 160. The processor 110 may be a central processing unit (CPU), a graphics processing unit (GPU), or a dedicated processor that performs methods according to the embodiments of the present invention. The memory 120 and the storage device 160 may each be formed as at least one of a volatile storage medium and a non-volatile storage medium. For example, the memory 120 may be formed as at least one of a read only memory (ROM) and a random access memory (RAM).

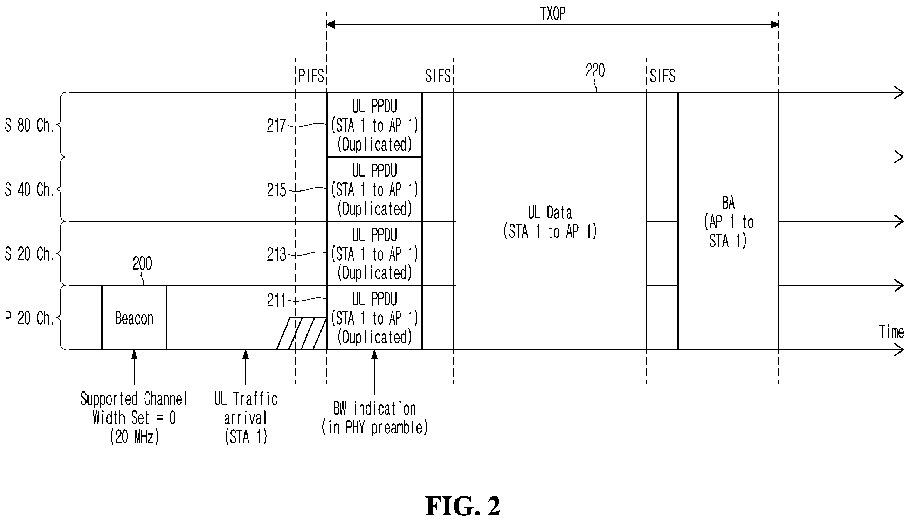

FIG. 2 illustrates a first embodiment of a bandwidth expansion method of an AP performing a power saving operation.

Referring to FIG. 2, AP 1 and STA 1 associated with AP 1 may operate. AP 1 may perform a power saving operation. The power saving operation performed by AP 1 may be an operation of reducing a bandwidth (e.g., a transmit/receive bandwidth). For example, instead of operating in an 80 MHz bandwidth that is an original operating bandwidth, AP 1 may operate only in a 20 MHz bandwidth for power saving. Because AP 1 performs the power saving operation, AP 1 may perform a clear channel assessment (CCA) operation and a transmit/receive operation only on a 20 MHz primary channel. AP 1 may transmit a beacon frame 200 or a probe response frame through the 20 MHz primary channel. AP 1 may indicate that AP 1 is operating only on the 20 MHz primary channel by setting a Supported Channel Width set bit in an HT Capabilities info field and/or a Channel Width field in a VHT Capabilities info field of a MAC header of the beacon frame 200 or the probe response frame to 0. As another method, the power saving operation performed by AP 1 may be an operation pre-negotiated with STAs associated with AP 1 (e.g., STAs including STA 1). AP 1 and STA 1 may have negotiated the power saving operation, and STA 1 may be aware of the 20 MHz primary channel that is an operating bandwidth and channel of AP 1. Hereinafter, the "20 MHz primary channel" may be referred to as a "primary 20 MHz channel" or a "primary-channel 20 MHz channel."

AP 1 may indicate a requirement for transmit/receive bandwidth expansion of AP 1 (e.g., a latency time required for switching an operating bandwidth of a transceiver) during a negotiation process with STAs associated with AP 1 (e.g., STAs including STA 1). For example, AP 1 may indicate the requirement for transmit/receive bandwidth expansion of AP 1 in a form of a capability (e.g., an EHT capabilities element, a UHR capabilities element, etc.) within an association response frame during an association process with STAs associated with AP 1 (e.g., STAs including STA 1). As yet another method, AP 1 may indicate the requirement for transmit/receive bandwidth expansion of AP 1 in a form of a capability (e.g., an EHT capabilities element, a UHR capabilities element, etc.) within the beacon frame 200 and/or the probe response frame transmitted by AP 1. As yet another method, AP 1 may indicate the requirement for transmit/receive bandwidth expansion of AP 1 as a separate element within the beacon frame 200 and/or the probe response frame transmitted by AP 1. As yet another method, AP 1 may exchange the requirement for transmit/receive bandwidth expansion of AP 1 through an action frame exchange with STAs associated with AP 1 (e.g., STAs including STA 1). The action frame includes a capability (e.g., an EHT capabilities element, a UHR capabilities element, etc.) and/or a separate element. AP 1 may indicate the requirement for transmit/receive bandwidth expansion of AP 1 by using the action frame.

STA 1 may desire to transmit an uplink (UL) frame 220. For example, the uplink frame 220 may include a PHY layer protocol data unit (PPDU), a MAC layer protocol data unit (MPDU), or an aggregated-MPDU (A-MPDU). STA 1 may perform a channel access operation. The channel access operation may be an EDCA backoff operation and an EDCA transmit opportunity (TXOP) acquisition procedure. The success of the channel access operation is determining transmission at a slot boundary at which a backoff counter reaches 0. STA 1 may desire to transmit the uplink frame 220 at a channel bandwidth wider than a channel bandwidth at which AP 1 is operating. STA 1 may perform a CCA operation on a secondary channel (e.g., a 20 MHz secondary channel, a 40 MHz secondary channel, etc.) for a priority inter frame space (PIFS) time starting from a PIFS time before an end time point of the EDCA backoff in alignment with the end time point. After the PIFS, STA 1 may transmit a UL PPDU 221 on the 20 MHz primary channel and simultaneously duplicate-transmit UL PPDUs 223, 225, and 227 on an idle secondary channel(s) (e.g., 20 MHz bandwidth channels). Here, the duplicate transmission means that the UL PPDU 221 on the primary channel and the UL PPDUs 233, 235, and 227 on the secondary channel are identical. The duplicate transmission refers to a duplicated PPDU transmission that duplicates and transmits a PPDU in units of 20 MHz. A length of the UL PPDUs 221, 223, 225, and 227 transmitted by STA 1 to AP 1 for indicating transmit/receive bandwidth expansion of AP 1 and/or an inter-frame space (IFS) used for transmission may satisfy the requirement (e.g., a latency time required for switching an operating bandwidth of a transceiver) for transmit/receive bandwidth expansion of AP 1 indicated in the form of a capability (e.g., an EHT capabilities element, a UHR capabilities element, etc.) in an association response frame, the beacon frame 200, and/or the probe response frame transmitted by AP 1. A total bandwidth transmitted by STA 1 may be greater than 20 MHz (e.g., 40 MHz, 80 MHz). STA 1 may acquire a TXOP through transmission of the UL PPDUs 221, 223, 225, and 227. STA 1 may indicate information on a channel bandwidth (e.g., 40 MHz, 80 MHz, 160 MHz, 80+80 MHz, 320 MHz, etc.) of a UL PPDU 210 expected to be subsequently transmitted to AP 1 by using a bandwidth indicator included in a signal (SIG) field of a PHY preamble of the UL PPDU 221 transmitted on the 20 MHz primary channel. The SIG field may be a high throughput (HT)-SIG, a very high throughput (VHT)-SIG, a high efficiency (HE)-SIG, an extremely high throughput (EHT)-SIG, a ultra-high reliability (UHR)-SIG, a universal (U)-SIG, a legacy (L, non-HT)-SIG, or the like. The bandwidth indicator may be a bit, a subfield, or the like. The bandwidth indicator may vary depending on a format of the PPDUs 221, 223, 225, and 227. The bandwidth indicator may also be indicated through all or some bits of a SERVICE field transmitted after the PHY preamble. AP 1 may prepare a transceiver to support a channel bandwidth of the UL PPDU 210 that STA 1 intends to transmit by referring to information on the channel bandwidth from the bandwidth indicator of the PHY preamble included in the UL PPDUs 221, 223, 225, and 227 transmitted by STA 1. For example, a transmission time of the UL PPDUs 221, 223, 225, and 227 plus an IFS time may be equal to or greater than a time required for AP 1 to prepare the transceiver. The time required for AP 1 to prepare the transceiver may take as long as the negotiated requirement for transmit/receive bandwidth expansion (e.g., a latency time required for switching an operating bandwidth of the transceiver). For example, the bandwidth indicated by STA 1 may be 80 MHz. In this case, AP 1 may prepare to transmit and receive at 80 MHz. STA 1 may transmit the UL PPDU 210 to AP 1 at an expanded bandwidth (e.g., 40 MHz, 80 MHz, 160 MHz, 80+80 MHz, 320 MHz, etc.) after a short inter-frame space (SIFS) or a time longer than the SIFS time (e.g., a PIFS time) following the initial transmission of the UL PPDUs 221, 223, 225, and 227. AP 1 may transmit a block acknowledgment (BA) frame to STA 1 after an SIFS following reception of the UL PPDU 210.

AP 1 may return to the power saving operation after the TXOP of STA 1 is terminated. That is, AP 1 may operate only on the 20 MHz primary channel to reduce power consumption after operating at a bandwidth greater than 20 MHz. AP 1 may explicitly notify STAs of the return through a beacon frame or implicitly operate on the 20 MHz channel after the TXOP is terminated. For example, when AP does not receive a frame from STA 1 for a certain period of time (e.g., a PIFS time) or does not receive a frame from STA 1 for a certain period of time after AP transmits a frame to STA 1, AP reduces the operating bandwidth again and operates on the 20 MHz channel.

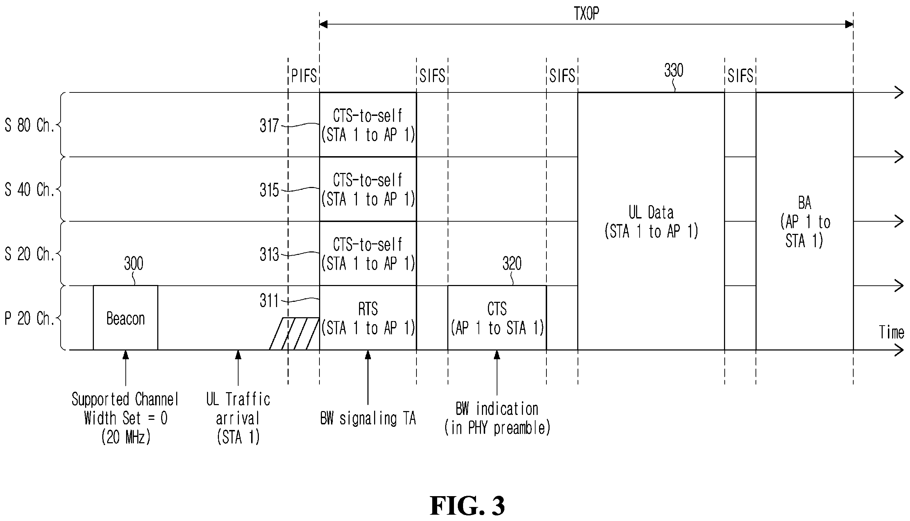

FIG. 3 is a timing diagram illustrating a second embodiment of a bandwidth expansion method of an AP that is in a power saving operation.

Referring to FIG. 3, AP 1 and STA 1 associated with AP 1 may operate. AP 1 may perform a power saving operation. The power saving operation performed by AP 1 may be an operation of reducing a bandwidth (e.g., a transmit/receive bandwidth). For example, instead of operating in an 80 MHz bandwidth that is an original operating bandwidth, AP 1 may operate only in a 20 MHz bandwidth for power saving. Because AP 1 performs the power saving operation, AP 1 may perform CCA and a transmit/receive operation only on a 20 MHz primary channel. AP 1 may transmit a beacon frame 300 or a probe response frame through the 20 MHz primary channel. AP 1 may indicate that AP 1 is operating only on the 20 MHz primary channel by setting a Supported Channel Width set bit in an HT Capabilities info field and/or a Channel Width field in a VHT Capabilities info field of a MAC header of the beacon frame 300 or the probe response frame to 0. As another method, the power saving operation performed by AP 1 may be an operation pre-negotiated with STAs associated with AP 1 (e.g., STAs including STA 1). AP 1 and STA 1 may have negotiated the power saving operation, and STA 1 may be aware of the 20 MHz primary channel that is an operating bandwidth and channel of AP 1.

AP 1 may indicate a requirement for transmit/receive bandwidth expansion of AP 1 (e.g., a latency time required for switching an operating bandwidth of a transceiver) during a negotiation process with STAs associated with AP 1 (e.g., STAs including STA 1). For example, AP 1 may indicate the requirement for transmit/receive bandwidth expansion of AP 1 in a form of a capability (e.g., an EHT capabilities element, a UHR capabilities element, etc.) within an association response frame during an association process with STAs associated with AP 1 (e.g., STAs including STA 1). As yet another method, AP 1 may indicate the requirement for transmit/receive bandwidth expansion of AP 1 in a form of a capability (e.g., an EHT capabilities element, a UHR capabilities element, etc.) within the beacon frame 300 and/or the probe response frame transmitted by AP 1. As yet another method, AP 1 may indicate the requirement for transmit/receive bandwidth expansion of AP 1 as a separate element within the beacon frame 200 and/or the probe response frame transmitted by AP 1. As yet another method, AP 1 may exchange a requirement necessary for transmit/receive bandwidth expansion of AP 1 through exchange of an action frame with STAs associated with AP 1 (e.g., STAs including STA 1), and the action frame includes a capability (e.g., an EHT capabilities element, a UHR capabilities element, etc.) and/or a separate element to indicate the requirement necessary for transmit/receive bandwidth expansion of AP 1.

STA 1 may desire to transmit a UL frame 330. For example, the uplink frame 330 may include a PHY layer protocol data unit (PPDU), a MAC layer protocol data unit (MPDU), or an aggregated-MPDU (A-MPDU). STA 1 may perform a channel access operation. The channel access operation may be an EDCA backoff operation and an EDCA transmit opportunity (TXOP) acquisition procedure. The success of the channel access operation is determining transmission at a slot boundary at which a backoff counter reaches 0. STA 1 may desire to transmit the uplink frame 330 at a channel bandwidth wider than a channel bandwidth at which AP 1 is operating. STA 1 may perform a CCA operation on a secondary channel (e.g., a 20 MHz secondary channel, a 40 MHz secondary channel, etc.) for a priority inter frame space (PIFS) time starting from a PIFS time before an end time point of the EDCA backoff in alignment with the end time point. After a PIFS, STA 1 may transmit an RTS frame 311 on a 20 MHz primary channel and simultaneously duplicate-transmit CTS-to-self frames 313, 315, 317 on an idle secondary channel(s) (20 MHz bandwidth channels). The CTS-to-self frames 313, 315, 317 are clear-to-send (CTS) frames in which an address of a receiver address (RA) field is set to STA 1 itself. A total bandwidth over which STA 1 transmits the CTS-to-self frames 313, 315, 317 may be greater than 20 MHz (40 MHz, 80 MHz). STA 1 may acquire a TXOP through transmission of the RTS frame 311 and the CTS-to-self frames 313, 315, 317. A transmitter address (TA) of the RTS frame 311 that STA 1 transmits to AP 1 through a 20 MHz primary channel may be a bandwidth signaling TA. The bandwidth signaling TA uses several bits of the TA to indicate a bandwidth. Alternatively, the bandwidth signaling TA may indicate that a SERVICE field included in a PPDU indicates a bandwidth. The SERVICE field may be located after a PHY preamble in a PPDU. When the bandwidth signaling TA is included in the TA of an RTS frame, a receiver of the RTS frame may check the SERVICE field to identify a bandwidth over which the RTS frame is transmitted. STA 1 may indicate, to AP 1, information on a channel bandwidth (e.g., 40 MHz, 80 MHz, 160 MHz, 80+80 MHz, 320 MHz, etc.) of a UL PPDU 330 that is expected to be subsequently transmitted by using the bandwidth signaling TA of the RTS frame 311 transmitted on a 20 MHz primary channel. AP 1 may prepare a transceiver to support a channel bandwidth of the UL PPDU 330 that STA 1 intends to transmit by referring to the bandwidth signaling TA of the RTS frame 311 that STA 1 transmitted on a 20 MHz primary channel. For example, a transmission time of the UL PPDU 330 + an IFS time may be equal to or greater than a time required for AP 1 to prepare a transceiver. The time required for AP 1 to prepare the transceiver may correspond to the negotiated requirement for transmit/receive bandwidth expansion (e.g., a latency time required for switching an operating bandwidth of the transceiver). For example, the bandwidth indicated by STA 1 may be 80 MHz, and AP 1 may prepare to transmit and receive at 80 MHz. AP 1 may transmit a CTS frame 320 to STA 1 through the 20 MHz primary channel after an SIFS from a time point of receiving the RTS frame 311 through the 20 MHz primary channel. The CTS frame 320 transmitted by AP 1 may be duplicate-transmitted on the 20 MHz primary channel and secondary channel(s) on which the RTS frame 311 was previously received. AP 1 may indicate a bandwidth of a channel for which transmit/receive preparation is complete by using a bandwidth indicator included in a SIG field of a PHY preamble of a PPDU that includes the CTS frame 320. STA 1 may transmit the UL PPDU 330 to AP 1 at an expanded bandwidth (e.g., 40 MHz, 80 MHz, 160 MHz, 80+80 MHz, 320 MHz, etc.) after the SIFS after receiving the CTS frame 320 by referring to a bandwidth indicator included in a SIG field of PHY preamble(s) of a PPDU that includes the received CTS frame 320. AP 1 may transmit a block acknowledgment (BA) frame to STA 1 after an SIFS following reception of the UL PPDU 330.

AP 1 may return to the power saving operation after the TXOP of STA 1 is terminated. That is, AP 1 may operate only on the 20 MHz primary channel to reduce power consumption after operating at a bandwidth greater than 20 MHz. AP 1 may explicitly notify an STA of the return by using a beacon frame or a probe response frame or implicitly operate on a 20 MHz primary channel after the TXOP is terminated. For example, when AP does not receive a frame from STA 1 for a certain period of time (e.g., a PIFS time) or does not receive a frame from STA 1 for a certain period of time after AP transmits a frame to STA 1, AP reduces the operating bandwidth again and operates on the 20 MHz channel.

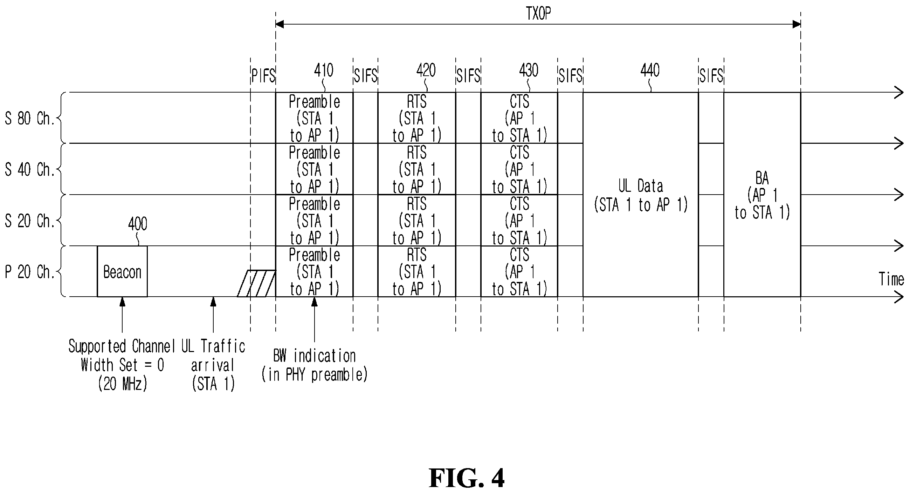

FIG. 4 is a timing diagram illustrating a third embodiment of a bandwidth expansion method of an AP that is in a power saving operation.

Referring to FIG. 4, AP 1 and STA 1 associated with AP 1 may operate. AP 1 may perform a power saving operation. The power saving operation performed by AP 1 may be an operation of reducing a bandwidth (e.g., a transmit/receive bandwidth). For example, instead of operating in an 80 MHz bandwidth that is an original operating bandwidth, AP 1 may operate only in a 20 MHz bandwidth for power saving. Because AP 1 performs the power saving operation, AP 1 may perform CCA and a transmit/receive operation only on a 20 MHz primary channel. AP 1 may transmit a beacon frame 400 or a probe response frame through the 20 MHz primary channel. AP 1 may indicate that AP 1 is operating only on the 20 MHz primary channel by setting a Supported Channel Width set bit in an HT Capabilities info field and/or a Channel Width field in a VHT Capabilities info field of a MAC header of the beacon frame 400 or the probe response frame to 0. As another method, the power saving operation performed by AP 1 may be an operation pre-negotiated with STAs associated with AP 1 (e.g., STAs including STA 1). AP 1 and STA 1 may have negotiated a power saving operation in advance, and based on the negotiation, STA 1 may be aware of the 20 MHz primary channel that is an operating bandwidth and channel of AP 1.

AP 1 may indicate a requirement for transmit/receive bandwidth expansion of AP 1 (e.g., a latency time required for switching an operating bandwidth of a transceiver) during a negotiation process with STAs associated with AP 1 (e.g., STAs including STA 1). For example, AP 1 may indicate the requirement for transmit/receive bandwidth expansion of AP 1 in a form of a capability (e.g., an EHT capabilities element, a UHR capabilities element, etc.) within an association response frame during an association process with STAs associated with AP 1 (e.g., STAs including STA 1). As yet another method, AP 1 may indicate the requirement for transmit/receive bandwidth expansion of AP 1 in a form of a capability (e.g., an EHT capabilities element, a UHR capabilities element, etc.) within the beacon frame 400 and/or the probe response frame transmitted by AP 1. As yet another method, AP 1 may indicate the requirement for transmit/receive bandwidth expansion of AP 1 as a separate element within the beacon frame 200 and/or the probe response frame transmitted by AP 1. As yet another method, AP 1 may exchange a requirement necessary for transmit/receive bandwidth expansion of AP 1 through exchange of an action frame with STAs associated with AP 1 (e.g., STAs including STA 1), and the action frame includes a capability (e.g., an EHT capabilities element, a UHR capabilities element, etc.) and/or a separate element to indicate the requirement necessary for transmit/receive bandwidth expansion of AP 1.

STA 1 may desire to transmit a UL frame 440. For example, the uplink frame 440 may include a PHY layer protocol data unit (PPDU), a MAC layer protocol data unit (MPDU), or an aggregated-MPDU (A-MPDU). STA 1 may perform a channel access operation. The channel access operation may be an EDCA backoff operation and an EDCA transmit opportunity (TXOP) acquisition procedure. The success of the channel access operation is determining transmission at a slot boundary at which a backoff counter reaches 0. STA 1 may desire to transmit the uplink frame 440 at a channel bandwidth wider than a channel bandwidth at which AP 1 is operating. STA 1 may perform a CCA operation on a secondary channel (e.g., a 20 MHz secondary channel, a 40 MHz secondary channel, etc.) for a priority inter frame space (PIFS) time starting from a PIFS time before an end time point of the EDCA backoff in alignment with the end time point. After a PIFS, STA 1 may simultaneously transmit a CTS-to-self frame 410 on idle secondary channel(s) including the 20 MHz primary channel. STA 1 may acquire a TXOP through transmission of the CTS-to-self frame 410. The CTS-to-self frame 410 is a clear-to-send (CTS) frame in which an address of a receiver address (RA) field is set to STA 1 itself. STA 1 may indicate information on a channel bandwidth (e.g., 40 MHz, 80 MHz, 160 MHz, 80+80 MHz, 320 MHz, etc.) of a UL PPDU 440 expected to be subsequently transmitted to AP 1 by using a bandwidth indicator included in a SIG field of a PHY preamble of the PPDU including the CTS-to-self frame 410. AP 1 may prepare a transceiver to support a channel bandwidth of the UL PPDU 440 that STA 1 intends to transmit by referring to a bandwidth indicator included in a SIG field of a PHY preamble of a PPDU that includes the CTS-to-self frame 410 that STA 1 transmitted. For example, a transmission time of the UL PPDU 440 + an IFS time may be equal to or greater than a time required for AP 1 to prepare a transceiver. The time required for AP 1 to prepare the transceiver may correspond to the negotiated requirement for transmit/receive bandwidth expansion (e.g., a latency time required for switching an operating bandwidth of the transceiver). STA 1 may transmit an RTS frame 420 to AP 1 after an SIFS after transmission of the CTS-to-self frame 410. The RTS frame that STA 1 transmits to AP 1 may be duplicate-transmitted on the 20 MHz primary channel and secondary channel(s) on which the CTS-to-self frame 410 was previously transmitted. The TA of the RTS frame 420 transmitted by STA 1 may be a bandwidth signaling TA. The bandwidth signaling TA uses several bits of the TA to indicate a bandwidth. Alternatively, the bandwidth signaling TA itself indicates that a SERVICE field that is included in a PPDU and located after a PHY preamble indicates a bandwidth. When the bandwidth signaling TA is included in the TA of an RTS frame, a receiver of the RTS frame may check the SERVICE field to identify a bandwidth over which the RTS frame is transmitted. AP 1 may prepare a transceiver to support a channel bandwidth of the UL PPDU 440 that STA 1 intends to transmit by referring to a bandwidth indicator included in a SIG field of a PHY preamble of a PPDU that includes the CTS-to-self frame 410 transmitted by STA 1 and/or the bandwidth signaling TA of the RTS frame 420. For example, a transmission time of the UL PPDU 440 + an IFS time may be equal to or greater than a time required for AP 1 to prepare a transceiver. AP 1 may transmit a CTS frame 430 to STA 1 after an SIFS after receiving the RTS frame 420. The CTS frame 430 transmitted by AP 1 may be duplicate-transmitted on the 20 MHz primary channel on which the RTS frame 420 was previously received and secondary channel(s) for which transmit/receive preparation is complete. STA 1 may transmit the UL PPDU 440 to AP 1 at an expanded bandwidth (e.g., 40 MHz, 80 MHz, 160 MHz, 80+80 MHz, 320 MHz, etc.) in the SIFS after receiving the CTS frame 430 by referring to a bandwidth of a channel over which the CTS frame 430 is transmitted. AP 1 may transmit a block acknowledgment (BA) frame to STA 1 after an SIFS following reception of the UL PPDU 440.

AP 1 may return to the power saving operation after the TXOP of STA 1 is terminated. That is, AP 1 may operate only on the 20 MHz primary channel to reduce power consumption after operating at a bandwidth greater than 20 MHz. AP 1 may explicitly notify the return by using a beacon frame or a probe response frame or implicitly operate on a 20 MHz primary channel after the TXOP is terminated. For example, when AP does not receive a frame from STA 1 for a certain period of time (e.g., a PIFS time) or does not receive a frame from STA 1 for a certain period of time after AP transmits a frame to STA 1, AP reduces the operating bandwidth again and operates on the 20 MHz channel.

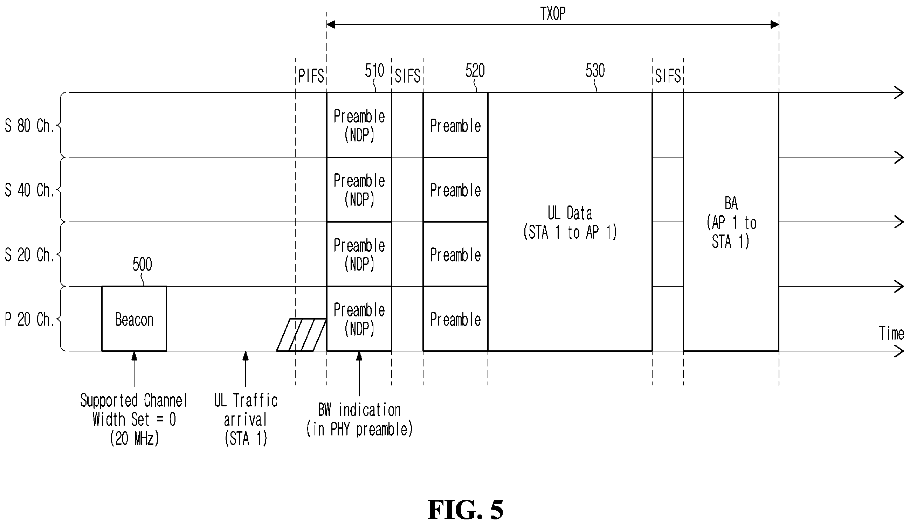

FIG. 5 is a timing diagram illustrating a fourth embodiment of a bandwidth expansion method of an AP performing a power saving operation.

Referring to FIG. 5, AP 1 and STA 1 associated with AP 1 may operate. AP 1 may perform a power saving operation. The power saving operation performed by AP 1 may be an operation of reducing a bandwidth (e.g., a transmit/receive bandwidth). For example, instead of operating in an 80 MHz bandwidth that is an original operating bandwidth, AP 1 may operate only in a 20 MHz bandwidth for power saving. Because AP 1 performs the power saving operation, AP 1 may perform CCA and a transmit/receive operation only on a 20 MHz primary channel. AP 1 may transmit a beacon frame 500 or a probe response frame through the 20 MHz primary channel. AP 1 may indicate that AP 1 is operating only on the 20 MHz primary channel by setting a Supported Channel Width set bit in an HT Capabilities info field and/or a Channel Width field in a VHT Capabilities info field of a MAC header of the beacon frame 500 or the probe response frame to 0. As another method, the power saving operation performed by AP 1 may be an operation pre-negotiated with STAs associated with AP 1 (e.g., STAs including STA 1). AP 1 and STA 1 may have negotiated the power saving operation, and STA 1 may be aware of the 20 MHz primary channel that is an operating bandwidth and channel of AP 1.

AP 1 may indicate a requirement for transmit/receive bandwidth expansion of AP 1 (e.g., a latency time required for switching an operating bandwidth of a transceiver) during a negotiation process with STAs associated with AP 1 (e.g., STAs including STA 1). For example, AP 1 may indicate the requirement for transmit/receive bandwidth expansion of AP 1 in a form of a capability (e.g., an EHT capabilities element, a UHR capabilities element, etc.) within an association response frame during an association process with STAs associated with AP 1 (e.g., STAs including STA 1). As yet another method, AP 1 may indicate the requirement for transmit/receive bandwidth expansion of AP 1 in a form of a capability (e.g., an EHT capabilities element, a UHR capabilities element, etc.) within the beacon frame 500 and/or the probe response frame transmitted by AP 1. As yet another method, AP 1 may indicate the requirement for transmit/receive bandwidth expansion of AP 1 as a separate element within the beacon frame 200 and/or the probe response frame transmitted by AP 1. As yet another method, AP 1 may exchange a requirement necessary for transmit/receive bandwidth expansion of AP 1 through exchange of an action frame with STAs associated with AP 1 (e.g., STAs including STA 1), and the action frame includes a capability (e.g., an EHT capabilities element, a UHR capabilities element, etc.) and/or a separate element to indicate the requirement necessary for transmit/receive bandwidth expansion of AP 1.

STA 1 may desire to transmit a UL frame 530. For example, the uplink frame 530 may include a PHY layer protocol data unit (PPDU), a MAC layer protocol data unit (MPDU), or an aggregated-MPDU (A-MPDU). STA 1 may perform a channel access operation. The channel access operation may be an EDCA backoff operation and an EDCA transmit opportunity (TXOP) acquisition procedure. The success of the channel access operation is determining transmission at a slot boundary at which a backoff counter reaches 0. STA 1 may desire to transmit the uplink frame 530 at a channel bandwidth wider than a channel bandwidth at which AP 1 is operating. STA 1 may perform a CCA operation on a secondary channel (e.g., a 20 MHz secondary channel, a 40 MHz secondary channel, etc.) for a priority inter frame space (PIFS) time starting from a PIFS time before an end time point of the EDCA backoff. After the PIFS, STA 1 may transmit a UL PPDU 510 on the 20 MHz primary channel and simultaneously duplicate-transmit a UL PPDU 510 on an idle secondary channel(s) (e.g., 20 MHz bandwidth channels). A total bandwidth transmitted by STA 1 may be greater than 20 MHz (e.g., 40 MHz, 80 MHz). STA 1 may acquire a TXOP through transmission of the UL PPDU 510.

The frame 510 that STA 1 initially transmits within the TXOP may not be a MAC frame. The initially transmitted frame 510 may include only a PHY preamble. That is, the initially transmitted frame 510 may be a PPDU that has only a PHY preamble and no PHY data field, that is, an NDP (null data PPDU). NDP 510 may be transmitted through a bandwidth wider than 20 MHz (e.g., an 80 MHz bandwidth). NDP 510 may be duplicated and transmitted per 20 MHz. The PHY preamble of NDP 510 may include a plurality of SIG fields (e.g., U-SIG). U-SIG may indicate a bandwidth at which STA 1 desires to transmit. For example, U-SIG has a 3-bit bandwidth field. A used bandwidth is indicated according to a value of the bandwidth field. U-SIG has a TXOP field. The TXOP field indicates a length of the TXOP obtained by STA 1. U-SIG may include an indicator indicating whether STA 1 transmits in uplink and a BSS color that is information for distinguishing a BSS of AP 1. Not only U-SIG but also a SIG that may be included in a preamble, such as L-SIG, HT-SIG, VHT-SIG, HE-SIG, EHT-SIG, or HR-SIG, may indicate one of the information (a bandwidth at which STA 1 desires to transmit, a TXOP length, an indicator indicating uplink transmission, and a BSS color).

STA 1 may satisfy a requirement necessary for transmit/receive bandwidth expansion of AP 1 (e.g., a latency time required for switching an operating bandwidth of a transceiver) by duplicate-transmitting the PHY preamble of NDP 510. That is, STA 1 may additionally transmit a frame 520 including a PHY preamble. As another method, STA 1 may transmit a QoS Null frame to AP 1 in order to satisfy a requirement necessary for transmit/receive bandwidth expansion of AP 1. The QoS Null frame transmitted by STA 1 to AP 1 may be a QoS Null (No ACK) frame that does not require acknowledgment. STA 1 may indicate a bandwidth desired to be used by using A-Control information included in a MAC header of the QoS Null frame. Alternatively, STA 1 may indicate a bandwidth desired to be used by using a PHY preamble of a QoS Null frame that includes a preamble including U-SIG. For example, a 3-bit bandwidth field is present in U-SIG of the PHY preamble of the QoS Null frame, and the bandwidth that is used is indicated by a value of the 3-bit bandwidth field of U-SIG. In addition, U-SIG has a TXOP field, and a length of the TXOP obtained by STA 1 is indicated by the TXOP field. U-SIG may include an indicator for indicating whether STA 1 transmits in uplink and a BSS color. Here, the BSS color refers to information for distinguishing a BSS of AP 1.

AP 1 may receive NDP 510 or a QoS Null frame transmitted by STA 1. BSS color information and an indicator indicating uplink transmission may be used in the received NDP 510 or QoS Null frame to identify whether an STA (e.g., STA 1) associated with AP 1 desires to transmit to AP 1. Based on the transmission bandwidth of STA 1 indicated in a preamble included in the received NDP 510 or QoS Null frame, AP 1 may prepare a receiver to be able to perform transmission and reception operations in a bandwidth indicated by STA 1 (e.g., 80 MHz). STA 1 may transmit a frame 530 (e.g., UL PPDU) to AP 1 after an SIFS time or a time longer than the SIFS (e.g., PIFS) from a transmission end point of NDP 510 or the QoS Null frame. The frame 530 transmitted by STA 1 is a frame transmitted on a channel wider than a 20 MHz bandwidth (e.g., an 80 MHz channel). AP 1 may transmit a BA frame to STA 1 after SIFS following reception of UL PPDU 530 of STA 1.

AP 1 may return to the power saving operation after the TXOP of STA 1 is terminated. That is, AP 1 may operate only on the 20 MHz primary channel to reduce power consumption after operating at a bandwidth greater than 20 MHz. AP 1 may explicitly notify the return through a beacon frame or implicitly operate on the 20 MHz channel after the TXOP is terminated. For example, when AP does not receive a frame from STA 1 for a certain period of time (e.g., a PIFS time) or does not receive a frame from STA 1 for a certain period of time after AP transmits a frame to STA 1, AP reduces the operating bandwidth again and operates on the 20 MHz channel.

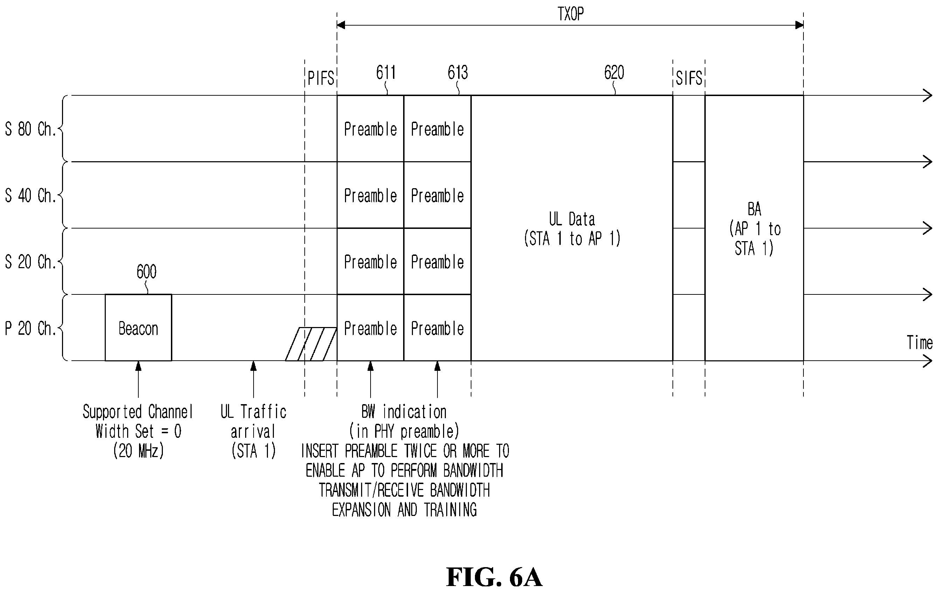

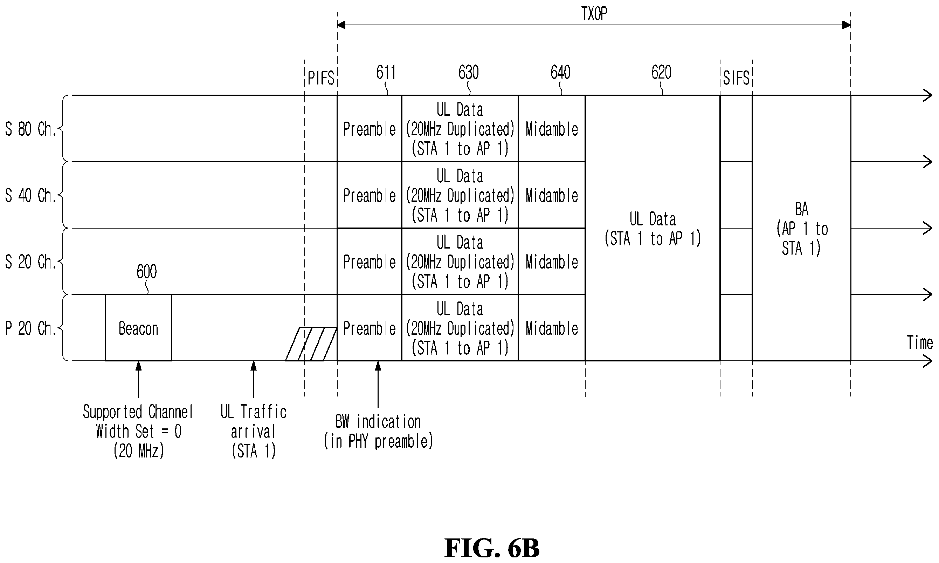

FIG. 6A and FIG. 6B are timing diagrams illustrating a fifth embodiment and a sixth embodiment of a bandwidth expansion method of an AP performing a power saving operation.

Referring to FIG. 6A and FIG. 6B, AP 1 and STA 1 associated with AP 1 may operate. AP 1 may perform a power saving operation. The power saving operation performed by AP 1 may be an operation of reducing a bandwidth (e.g., a transmit/receive bandwidth). For example, instead of operating in an 80 MHz bandwidth that is an original operating bandwidth, AP 1 may operate only in a 20 MHz bandwidth for power saving. Because AP 1 performs the power saving operation, AP 1 may perform CCA and a transmit/receive operation only on a 20 MHz primary channel. AP 1 may transmit a beacon frame 600 or a probe response frame through the 20 MHz primary channel. AP 1 may indicate that AP 1 is operating only on the 20 MHz primary channel by setting a Supported Channel Width set bit in an HT Capabilities info field and/or a Channel Width field in a VHT Capabilities info field of a MAC header of the beacon frame 600 or the probe response frame to 0. As another method, the power saving operation performed by AP 1 may be an operation pre-negotiated with STAs associated with AP 1 (e.g., STAs including STA 1). AP 1 and STA 1 may have negotiated the power saving operation, and STA 1 may be aware of the 20 MHz primary channel that is an operating bandwidth and channel of AP 1.

AP 1 may indicate a requirement for transmit/receive bandwidth expansion of AP 1 (e.g., a latency time required for switching an operating bandwidth of a transceiver) during a negotiation process with STAs associated with AP 1 (e.g., STAs including STA 1). For example, AP 1 may indicate the requirement for transmit/receive bandwidth expansion of AP 1 in a form of a capability (e.g., an EHT capabilities element, a UHR capabilities element, etc.) within an association response frame during an association process with STAs associated with AP 1 (e.g., STAs including STA 1). As yet another method, AP 1 may indicate the requirement for transmit/receive bandwidth expansion of AP 1 in a form of a capability (e.g., an EHT capabilities element, a UHR capabilities element, etc.) within the beacon frame 600 and/or the probe response frame transmitted by AP 1. As yet another method, AP 1 may indicate the requirement for transmit/receive bandwidth expansion of AP 1 as a separate element within the beacon frame 200 and/or the probe response frame transmitted by AP 1. As yet another method, AP 1 may exchange a requirement necessary for transmit/receive bandwidth expansion of AP 1 through exchange of an action frame with STAs associated with AP 1 (e.g., STAs including STA 1), and the action frame includes a capability (e.g., an EHT capabilities element, a UHR capabilities element, etc.) and/or a separate element to indicate the requirement necessary for transmit/receive bandwidth expansion of AP 1.

STA 1 may desire to transmit a UL frame 620. For example, the uplink frame 620 may include a PHY layer protocol data unit (PPDU), a MAC layer protocol data unit (MPDU), or an aggregated-MPDU (A-MPDU). STA 1 may perform a channel access operation. The channel access operation may be an EDCA backoff operation and an EDCA transmit opportunity (TXOP) acquisition procedure. The success of the channel access operation is determining transmission at a slot boundary at which a backoff counter reaches 0. STA 1 may desire to transmit the uplink frame 620 at a channel bandwidth wider than a channel bandwidth at which AP 1 is operating. STA 1 may perform a CCA operation on a secondary channel (e.g., a 20 MHz secondary channel, a 40 MHz secondary channel, etc.) for a priority inter frame space (PIFS) time starting from a PIFS time before an end time point of the EDCA backoff in alignment with the end time point. After the PIFS, STA 1 may transmit a UL PPDU 610 on the 20 MHz primary channel and simultaneously duplicate-transmit a UL PPDU 610 on an idle secondary channel(s) (e.g., 20 MHz bandwidth channels). A total bandwidth transmitted by STA 1 may be greater than 20 MHz (e.g., 40 MHz, 80 MHz). STA 1 may acquire a TXOP through transmission of a UL PPDU.

Referring to FIG. 6A, the UL PPDU that is the frame first transmitted by STA 1 within the TXOP may be transmitted with a bandwidth wider than 20 MHz (e.g., 80 MHz). The UL PPDU of STA 1 may include two PHY preambles 611 and 613. That is, STA 1 first transmits a PHY preamble 611 on each 20 MHz channel of the 80 MHz channel and repeatedly transmits the PHY preamble 613 once again after transmission of the PHY preamble 611 is terminated. This operation may be intended to secure a time for expanding the operating bandwidth of AP 1 from 20 MHz to 80 MHz. As another method, STA 1 may first transmit the PHY preamble 611 on each 20 MHz channel of the 80 MHz channel and repeatedly transmit the PHY preamble until a requirement necessary for transmit/receive bandwidth expansion of AP 1 (e.g., a latency time required for switching an operating bandwidth) is satisfied.

The PHY preambles 611 and 613 may include a plurality of SIG fields (e.g., U-SIG). U-SIG may indicate a bandwidth at which STA 1 desires to transmit. For example, U-SIG may include a 3-bit bandwidth field. A used bandwidth is indicated according to a value of the bandwidth field. U-SIG includes a TXOP field. The TXOP field indicates a length of the TXOP acquired by STA 1. U-SIG may include an indicator indicating whether STA 1 transmits in uplink and a BSS color that is information for distinguishing a BSS of AP 1. Not only U-SIG but also at least one of various types of SIGs that may be included in a preamble (e.g., L-SIG, HT-SIG, VHT-SIG, HE-SIG, EHT-SIG, or UHR-SIG) may indicate one of a bandwidth at which STA 1 desires to transmit, a TXOP length, an indicator indicating uplink transmission, or a BSS color. The PHY preamble 611 that STA 1 first transmits using a UL PPDU further includes an indicator indicating that an additional preamble 613 is subsequently transmitted.

AP 1 may receive the UL PPDU transmitted by STA 1. AP 1 may identify whether an STA (e.g., STA 1) associated with AP 1 desires to transmit data to AP 1 by using BSS color information of the PHY preambles 611 and 613 of the received UL PPDU and an indicator indicating uplink transmission. Based on a transmission bandwidth of STA 1 indicated in the preambles 611 and 613 included in the received PPDU, AP 1 may prepare a receiver to be able to perform transmission and reception operations in the bandwidth indicated by STA 1 (e.g., 80 MHz). A time required for AP 1 to prepare the transceiver may take as long as the negotiated requirement for transmit/receive bandwidth expansion (e.g., a latency time required for switching an operating bandwidth of the transceiver). An operation of AP 1 to change an operating bandwidth of the receiver may be performed by the first PHY preamble 611 included in the UL PPDU transmitted by STA 1. AP 1 may re-identify a bandwidth at which a PPDU 620 is transmitted in the second and subsequent PHY preamble 613. AP 1 may perform operations for reception in a wide channel bandwidth such as a channel measurement operation and training. AP 1 receives the UL PPDU 620 from STA 1 by using the 80 MHz channel. AP 1 may transmit a BA frame to STA 1 after an SIFS from a time point at which reception of the UL PPDU 620 from STA 1 is completed.

Referring to FIG. 6B, a UL PPDU that is a frame first transmitted by STA 1 within a TXOP may be transmitted by using a bandwidth wider than 20 MHz (e.g., 80 MHz). STA 1 transmits the PHY preamble 611 on each 20 MHz channel of the 80 MHz channel and transmits a 20 MHz-duplicated PPDU 630 to AP 1 after the transmission of the PHY preamble 611 is completed. The PHY preambles 611 may include a plurality of SIG fields (e.g., U-SIG). U-SIG may indicate a bandwidth at which STA 1 desires to transmit. For example, U-SIG may include a 3-bit bandwidth field and indicate the used bandwidth according to a value of the bandwidth field. The bandwidth at which STA 1 desires to transmit may be indicated not only through U-SIG but also through at least one of various types of SIGs that may be included in the preamble such as L-SIG, HT-SIG, VHT-SIG, HE-SIG, EHT-SIG, or UHR-SIG. AP 1 may receive the 20 MHz PPDU 630 and identify the bandwidth at which STA 1 desires to transmit. The bandwidth at which STA 1 desires to transmit may be 80 MHz. AP 1 may receive the 20 MHz PPDU 630 from STA 1 from a time point at which the preamble 611 is received until a requirement for transmit/receive bandwidth expansion (e.g., a latency time necessary for switching an operating bandwidth of the transceiver) is satisfied. After transmitting the preamble 611 of the PPDU, STA 1 may reference a requirement necessary for transmit/receive bandwidth expansion of AP 1 and transmit a midamble (PHY midamble) 640 at a time point at which AP 1 becomes capable of transmit/receive operations in the expanded bandwidth, thereby training a transceiver of AP 1 for transmit/receive bandwidth expansion of AP 1. The operation of training the transceiver may be intended for AP 1 to operate in a wide bandwidth. The midamble 640 may be inserted in the middle of a data field (e.g., data bit(s), data symbol(s)) of the PPDUs 620 and 630. In other words, the midamble 640 may be inserted between the PPDU 620 and the 20 MHz PPDU 630. The midamble may be an entirety or a part of a preamble included in the middle of PPDU 620 (e.g., at least one field among (HE, EHT, UHR)-LTF (long training field), (HE, EHT, UHR)-STF (short training field), L-SIG, and (HE, EHT, U, UHR)-SIG). When AP 1 becomes capable of transmitting and receiving in a wide bandwidth, STA 1 may transmit a wide-bandwidth PPDU 620 (e.g., 80 MHz bandwidth) to AP 1, and AP 1 receives the 80 MHz bandwidth PPDU from STA 1. AP 1 may transmit a BA frame to STA 1 after SIFS from the reception of the UL PPDU 620 of STA 1.

Referring again to FIG. 6A and FIG. 6B, AP 1 may return to a power saving operation after the TXOP of STA 1 is terminated. That is, AP 1 may operate only on the 20 MHz primary channel to reduce power consumption after operating at a bandwidth greater than 20 MHz. AP 1 may explicitly notify the return through a beacon frame or implicitly operate on the 20 MHz channel after the TXOP is terminated. For example, when AP does not receive a frame from STA 1 for a certain period of time (e.g., a PIFS time) or does not receive a frame from STA 1 for a certain period of time after AP transmits a frame to STA 1, AP reduces the operating bandwidth again and operates on the 20 MHz channel.

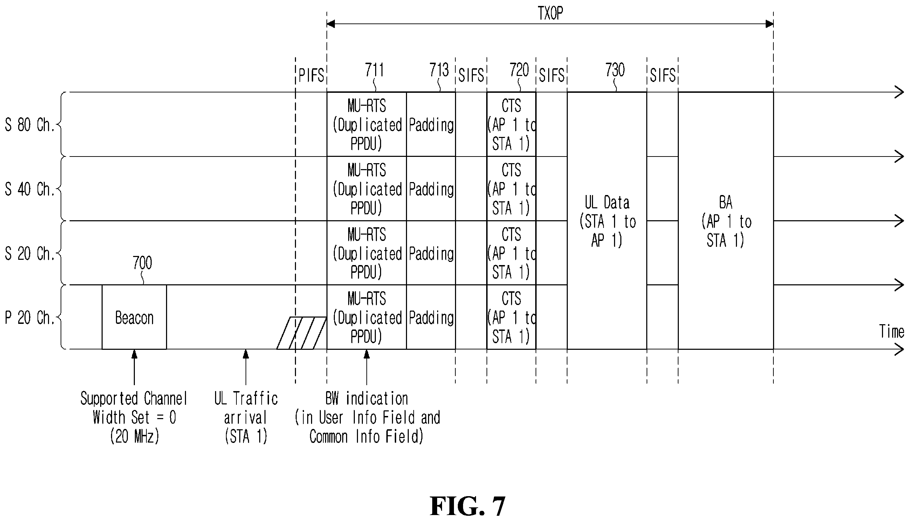

FIG. 7 is a timing diagram illustrating a seventh embodiment of a bandwidth expansion method of an AP performing a power saving operation.

Referring to FIG. 7, AP 1 and STA 1 associated with AP 1 may operate. AP 1 may perform a power saving operation. The power saving operation performed by AP 1 may be an operation of reducing a bandwidth (e.g., a transmit/receive bandwidth). For example, instead of operating in an 80 MHz bandwidth that is an original operating bandwidth, AP 1 may operate only in a 20 MHz bandwidth for power saving. Because AP 1 performs the power saving operation, AP 1 may perform CCA and a transmit/receive operation only on a 20 MHz primary channel. AP 1 may transmit a beacon frame 700 or a probe response frame through the 20 MHz primary channel. AP 1 may indicate that AP 1 is operating only on the 20 MHz primary channel by setting a Supported Channel Width set bit in an HT Capabilities info field and/or a Channel Width field in a VHT Capabilities info field of a MAC header of the beacon frame 700 or the probe response frame to 0. As another method, the power saving operation performed by AP 1 may be an operation pre-negotiated with STAs associated with AP 1 (e.g., STAs including STA 1). AP 1 and STA 1 may have negotiated the power saving operation, and STA 1 may be aware of the 20 MHz primary channel that is an operating bandwidth and channel of AP 1.

AP 1 may indicate a requirement for transmit/receive bandwidth expansion of AP 1 (e.g., a latency time required for switching an operating bandwidth of a transceiver) during a negotiation process with STAs associated with AP 1 (e.g., STAs including STA 1). For example, AP 1 may indicate the requirement for transmit/receive bandwidth expansion of AP 1 in a form of a capability (e.g., an EHT capabilities element, a UHR capabilities element, etc.) within an association response frame during an association process with STAs associated with AP 1 (e.g., STAs including STA 1). As yet another method, AP 1 may indicate the requirement for transmit/receive bandwidth expansion of AP 1 in a form of a capability (e.g., an EHT capabilities element, a UHR capabilities element, etc.) within the beacon frame 700 and/or the probe response frame transmitted by AP 1. During the association process, information for identifying AP 1 (e.g., an association identifier (AID) for indicating AP 1) may also be negotiated or indicated. As yet another method, AP 1 may indicate the requirement for transmit/receive bandwidth expansion of AP 1 as a separate element within the beacon frame 200 and/or the probe response frame transmitted by AP 1. As yet another method, AP 1 may exchange a requirement necessary for transmit/receive bandwidth expansion of AP 1 through exchange of an action frame with STAs associated with AP 1 (e.g., STAs including STA 1), and the action frame includes a capability (e.g., an EHT capabilities element, a UHR capabilities element, etc.) and/or a separate element to indicate the requirement necessary for transmit/receive bandwidth expansion of AP 1.

STA 1 may desire to transmit a UL frame 730. For example, the uplink frame 730 may include a PHY layer protocol data unit (PPDU), a MAC layer protocol data unit (MPDU), or an aggregated-MPDU (A-MPDU). STA 1 may perform a channel access operation. The channel access operation may be an EDCA backoff operation and an EDCA transmit opportunity (TXOP) acquisition procedure. The success of the channel access operation is determining transmission at a slot boundary at which a backoff counter reaches 0. STA 1 may desire to transmit the uplink frame 730 at a channel bandwidth wider than a channel bandwidth at which AP 1 is operating. STA 1 may perform a CCA operation on a secondary channel (e.g., a 20 MHz secondary channel, a 40 MHz secondary channel, etc.) for a priority inter frame space (PIFS) time starting from a PIFS time before an end time point of the EDCA backoff in alignment with the end time point. After the PIFS, STA 1 may transmit a UL PPDU 711 on the 20 MHz primary channel and simultaneously duplicate-transmit a UL PPDU 711 on an idle secondary channel(s) (e.g., 20 MHz bandwidth channels). A total bandwidth transmitted by STA 1 may be greater than 20 MHz (e.g., 40 MHz, 80 MHz). STA 1 may acquire a TXOP through transmission of the UL PPDU 711.

The UL PPDU that is the frame first transmitted by STA 1 within the TXOP may be transmitted with a bandwidth wider than 20 MHz (e.g., 80 MHz). A UL PPDU 711 transmitted first by STA 1 within the TXOP may be duplicated and transmitted per 20 MHz channel. That is, a plurality of PPDUs 711 may be transmitted. As a more detailed example, when STA 1 transmits a frame by using an 80 MHz bandwidth, STA 1 simultaneously transmits identical PPDUs 711 duplicated on four 20 MHz channels. The initially transmitted PPDUs 711 may include an MU-RTS trigger frame. Hereinafter, the initially transmitted PPDU 711 is referred to as an MU-RTS trigger frame. The MU-RTS trigger frame is also referred to as an MU-RTS frame. The MU-RTS trigger frame 711 transmitted by STA 1 may include information indicating a bandwidth (e.g., 80 MHz bandwidth) that is to be used by AP 1. The MU-RTS trigger frame 711 includes an indicator capable of identifying AP 1 (e.g., a predetermined AID for AP 1 and/or an entirety or a part of a MAC address). The bandwidth that is to be used by AP 1 and the indicator capable of identifying AP 1 may be included in at least one of a user info field or a common info field that is a field included in the MU-RTS trigger frame 711. AP 1 adds a padding 713 (e.g., a padding field, a padding bit) to a last portion of the MU-RTS trigger frame 711 such that the padding is equal to or greater than a time required for AP 1 to switch a transceiver operation to a wider channel bandwidth. A time required for AP 1 to prepare the transceiver may take as long as the negotiated requirement for transmit/receive bandwidth expansion (e.g., a latency time required for switching an operating bandwidth of the transceiver). The padding 713 is added to increase a time length of the frame 711. That is, for a duration of the padding 713 of the MU-RTS frame 711 transmitted by STA 1, AP 1 may switch the operation of the transceiver to a wider channel bandwidth. AP 1 may receive the MU-RTS trigger frame 711 transmitted by STA 1. AP 1 identifies a bandwidth (e.g., 80 MHz) indicated by the MU-RTS trigger frame 711 and switches the transceiver to be capable of transmitting and receiving on an 80 MHz channel. AP 1 transmits a CTS frame 720 on an 80 MHz channel after a SIFS time from a time point at which reception of the MU-RTS trigger frame 711 is completed. STA 1 transmits a UL PPDU 730 on an 80 MHz channel after a SIFS time from a time point at which reception of the CTS frame 720 of AP 1 is completed. AP 1 receives the UL PPDU 730 from STA 1 by using an 80 MHz channel. AP 1 may transmit a BA frame to STA 1 after SIFS from the reception of the UL PPDU 730 of STA 1. Meanwhile, the function of a MU-RTS trigger frame may be replaced by a buffer status report poll (BSRP) trigger frame. STA 1 transmits the BSRP trigger frame to AP 1. The BSRP trigger frame indicates a bandwidth that STA 1 intends to use. The BSRP trigger frame includes a padding having a length equal to or greater than a requirement for transmission/reception bandwidth expansion of AP 1.

AP 1 may return to the power saving operation after the TXOP of STA 1 is terminated. That is, AP 1 may operate only on the 20 MHz primary channel to reduce power consumption after operating at a bandwidth greater than 20 MHz. AP 1 may explicitly notify STAs of the return through a beacon frame or implicitly operate on the 20 MHz channel after the TXOP is terminated. For example, when AP does not receive a frame from STA 1 for a certain period of time (e.g., a PIFS time) or does not receive a frame from STA 1 for a certain period of time after AP transmits a frame to STA 1, AP reduces the operating bandwidth again and operates on the 20 MHz channel.

Hereinafter, a procedure for band expansion during a power saving operation is described. Here, 'band expansion' refers to an operation of temporarily expanding a band used for communication. 'Band' may refer to a frequency band. The term 'band' may be used in substantially the same meaning as 'channel'. The procedure for band expansion may be performed by an AP and an STA. An AP in a power saving state may communicate by using a primary channel and some of secondary channels. For example, an AP and an STA in a power saving state may communicate by using only a primary channel. Here, a bandwidth of the primary channel may be 20 MHz. According to an embodiment of the present disclosure, an AP and an STA in a power saving state may temporarily expand a band used for communication by performing a procedure for band expansion. In other words, communication may be performed by using a channel used for the power saving operation and at least one additional channel. Such an expanded band is referred to as an expanded channel. That is, the expanded channel refers to channels that an AP and an STA in a power saving state temporarily use for data transmission or reception. The expanded channel may include a primary channel and secondary channels. A total bandwidth of the expanded channel may be equal to or less than a maximum bandwidth available to the AP.

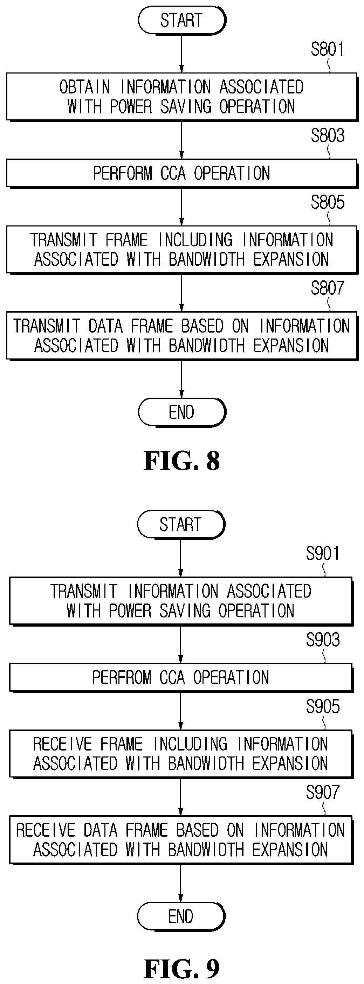

FIG. 8 illustrates a flowchart of a communication procedure during a power saving operation according to an embodiment of the present disclosure. The procedure illustrated in FIG. 8 is performed by an STA (e.g., STA 1 of FIG. 2). The STA illustrated in FIG. 8 is an STA associated with an AP (e.g., AP 1 of FIG. 2).

Referring to FIG. 8, in step S801, the STA obtains information associated with the power saving operation. For example, the information associated with the power saving operation may include at least one of a time required for switching an operating channel, a requirement for band expansion, or information indicating whether the power saving operation is performed. Here, the time required for switching an operating channel refers to a time required for the AP, which has been operating on a channel used for the power saving operation (e.g., the 20 MHz primary channel), to switch, change, or control its hardware or software (such as a transceiver) to operate on an expanded channel. The information associated with the power saving operation may be obtained from negotiation associated with the power saving operation of the AP and the STA. Alternatively, the information associated with the power saving operation may be obtained from a frame (e.g., the beacon frame 200 of FIG. 2) transmitted from the AP. The frame transmitted from the AP may be a beacon frame or a probe response frame. The STA may receive a frame transmitted from the AP through the primary channel.

In step S803, the STA performs a CCA operation. Here, CCA refers to an operation of sensing physical availability of a wireless channel. The CCA may be performed during a time interval of PIFS. The CCA may be performed to be terminated at a time point of transmission of a frame (e.g., the RTS frame 311 of FIG. 2) that includes the information associated with band expansion. The CCA may be performed by using at least a subset of the primary channel or secondary channels.

In step S805, the STA transmits a frame including the information associated with band expansion. For example, the frame including the information associated with band expansion may include at least one of a PPDU (e.g., the UL PPDU 211 of FIG. 2), a CTS frame (e.g., the CTS-to-self frame 410 of FIG. 4), a RTS frame (e.g., the RTS frame 311 of FIG. 3), an MU-RTS frame (e.g., the MU-RTS trigger frame 711 of FIG. 7), a QoS Null frame, or an NDP (e.g., NDP 510 of FIG. 5). The frame including the information associated with band expansion may be transmitted to the AP. The information associated with band expansion includes information on an expanded channel. The expanded channel includes at least one of the primary channel or the secondary channels. The frame including the information associated with band expansion may be transmitted through the expanded channel.

In step S807, the STA transmits a data frame (e.g., the UL PPDU 220 of FIG. 2) based on the information associated with band expansion. For example, the STA may transmit the data frame based on information on a channel included in the information associated with band expansion. In other words, the data frame may be transmitted through a channel indicated by the information on the channel. For example, when the information on the channel indicates a primary channel and a secondary channel having a bandwidth of 20 MHz, the data frame may be transmitted through the primary channel and the secondary channel having a bandwidth of 20 MHz.

FIG. 9 illustrates a flowchart of a communication procedure during a power saving operation according to an embodiment of the present disclosure. The procedure illustrated in FIG. 9 is performed by an AP (e.g., AP 1 of FIG. 2). The AP illustrated in FIG. 9 is an AP associated with an STA (e.g., STA 1 of FIG. 2). The AP of FIG. 9 may be an AP that is performing a power saving operation. In other words, the AP may be an AP that is operating only on a primary channel.

Referring to FIG. 9, in step S901, the AP transmits information associated with the power saving operation. For example, the information associated with the power saving operation may include at least one of a time required for switching an operating channel, a requirement for band expansion, or information indicating whether the power saving operation is performed. Here, the time required for switching an operating channel refers to a time required for the AP, which has been operating on a channel used for the power saving operation (e.g., the 20 MHz primary channel), to switch, change, or control its hardware or software (such as a transceiver) to operate on an expanded channel. The information associated with the power saving operation may be transmitted during a negotiation process associated with the power saving operation of the AP and the STA. Alternatively, the information associated with the power saving operation may be transmitted by using a frame (e.g., the beacon frame 200 of FIG. 2). For example, the AP may transmit the information associated with the power saving operation by using a beacon frame or a probe response frame. The AP may transmit the information associated with the power saving operation through the primary channel.

In step S903, the AP performs a CCA operation. Here, CCA refers to an operation of sensing physical availability of a wireless channel. The CCA may be performed on the primary channel. After performing the CCA operation, the AP may transmit a result of the CCA to the STA. In other words, the AP may transmit, to the STA, information indicating whether the wireless channel is physically available.

In step S905, the AP receives a frame including the information associated with band expansion. The frame including the information associated with band expansion may be received from the STA. For example, the frame including the information associated with band expansion may include at least one of a PPDU (e.g., the UL PPDU 211 of FIG. 2), a CTS frame (e.g., the CTS-to-self frame 410 of FIG. 4), a RTS frame (e.g., the RTS frame 311 of FIG. 3), an MU-RTS frame (e.g., the MU-RTS trigger frame 711 of FIG. 7), a QoS Null frame, or an NDP (e.g., NDP 510 of FIG. 5). The information associated with band expansion includes information on an expanded channel. The expanded channel includes at least one of the primary channel or the secondary channel. After receiving the information associated with band expansion, the AP may switch an operating channel from the primary channel to the expanded channel to perform communication on the expanded channel. After switching the operating channel, the AP may transmit a response frame (e.g., the CTS frame 320 of FIG. 3). For example, the response frame may include a CTS frame. The switching of the operating channel may include an operation of controlling the transceiver of the AP to communicate through the expanded channel.

In step S907, the AP receives a data frame (e.g., the UL PPDU 330 of FIG. 3) based on the information associated with band expansion. For example, the AP may receive the data frame based on information on an expanded channel included in the information associated with band expansion. In other words, the data frame may be received through the expanded channel. For example, when the information on the channel indicates a primary channel and a secondary channel having a bandwidth of 20 MHz, the data frame may be received through the primary channel and the secondary channel having a bandwidth of 20 MHz.

In FIGS. 8 and 9, although steps S805 and S807 or steps S905 and S907 have been described separately, according to an embodiment of the present disclosure, steps S805 and S807 or steps S905 and S907 may be performed as a single step. For example, information associated with band expansion may be included in a data frame. As an example, the information associated with band expansion may be included in a preamble (e.g., the preamble 611 of FIG. 6) of the data frame.

Hereinafter, a detailed embodiment of a band expansion procedure is described. The band expansion procedure may be performed after a power saving operation is performed through a negotiation between an AP and an STA or by exchanging information associated with the power saving operation. For example, the band expansion procedure to be described below may be performed after step S801 of FIG. 8 or step S901 of FIG. 9.

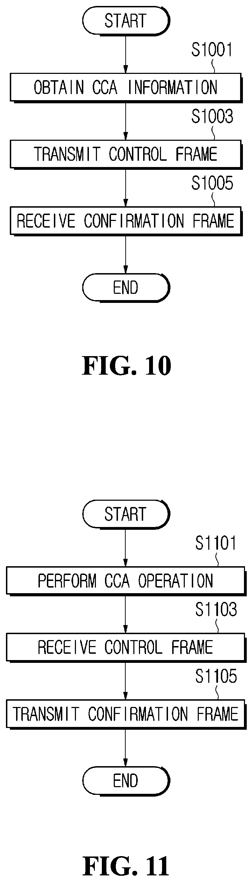

FIG. 10 illustrates a flowchart of a band expansion procedure according to an embodiment of the present disclosure. The procedure of FIG. 10 is performed by an STA (e.g., STA 1 of FIG. 2).

Referring to FIG. 10, in step S1001, the STA obtains CCA information. The CCA information may be obtained by a CCA operation. The CCA information is information indicating whether a wireless channel is physically available. The STA may perform a CCA operation on all operating channels. For example, the STA may perform the CCA operation starting from a PIFS time before a time point at which a backoff for obtaining a TXOP is completed. Alternatively, the CCA information may be received from the AP (e.g., AP 1 of FIG. 2).

In step S1003, the STA may transmit a control frame. For example, the control frame may include at least one of a CTS frame, a CTS-to-Self frame (e.g., the CTS-to-self frame 410 of FIG. 4), a RTS frame (e.g., the RTS frame 311 of FIG. 3), or an MU-RTS frame (e.g., the MU-RTS trigger frame 711 of FIG. 7). The STA may transmit the control frame through all operating channels. Here, the control frames on each channel may be the same control frame. For example, the control frame on each channel may be a duplicated control frame. The control frame includes information associated with band expansion. The information associated with band expansion may include information indicating channels used for communication and bandwidths of the channels. The control frame may include padding (e.g., the padding 713 of FIG. 7). A total time length of the control frame and the padding may be equal to or longer than a time during which the transceiver of the AP is switched. That is, the total time length of the control frame and the padding may be equal to or longer than a time required for switching the operating channel.

In step S1005, the STA receives a confirmation frame (e.g., the CTS frame 320 of FIG. 3). For example, the confirmation frame may be a CTS frame. The STA may receive the confirmation frame from the AP. For example, the STA may receive the confirmation frame through the primary channel. As another example, the STA may receive the confirmation frame through channels on which the control frame is transmitted. The confirmation frame may include information indicating a channel on which communication preparation is completed. For example, the confirmation frame may indicate the channel on which communication preparation is completed by using a SIG field of a PHY preamble. After receiving the confirmation frame, the STA may transmit data by using the expanded channel.

FIG. 11 illustrates a flowchart of a band expansion procedure according to an embodiment of the present disclosure. The procedure of FIG. 11 is performed by an AP. The procedure of FIG. 11 may be a procedure corresponding to the procedure of FIG. 10.

In step S1101, the AP performs a CCA operation. Here, the CCA operation refers to an operation of sensing physical availability of a wireless channel. The CCA operation may be performed on a primary channel. After performing the CCA operation, the AP may transmit a result of the CCA to the STA. In other words, the AP may transmit, to the STA, information indicating whether the wireless channel is physically available.

In step S1103, the AP may receive a control frame. For example, the control frame may include at least one of a CTS frame, a CTS-to-Self frame (e.g., the CTS-to-self frame 410 of FIG. 4), a RTS frame (e.g., the RTS frame 311 of FIG. 3), or an MU-RTS frame (e.g., the MU-RTS trigger frame 711 of FIG. 7). The AP may receive the control frame through all operating channels. Here, the control frames on each channel may be the same control frame. For example, the control frame on each channel may be a duplicated control frame. The control frame includes information associated with band expansion. The information associated with band expansion may include information indicating channels used for communication and bandwidths of the channels. The control frame may include padding (e.g., the padding 713 of FIG. 7). A total time length of the control frame and the padding may be equal to or longer than a time during which the AP switches the operating channel. The AP may switch the operating channel after reception of the control frame starts. The AP may switch the operating channel while the control frame and the padding are being received.

In step S1105, the AP transmits a confirmation frame (e.g., the CTS frame 320 of FIG. 3). For example, the confirmation frame may be a CTS frame. The AP may transmit the confirmation frame to the STA. For example, the AP may transmit the confirmation frame through the primary channel. As another example, the AP may transmit the confirmation frame through channels on which the control frame is received. The confirmation frame may include information indicating a channel on which communication preparation is completed. For example, the confirmation frame may indicate the channel on which communication preparation is completed by using a SIG field of a PHY preamble.

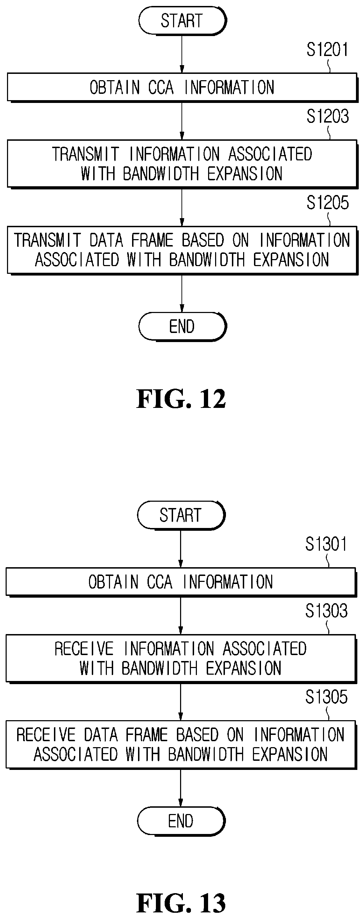

FIG. 12 illustrates a flowchart of a band expansion procedure according to an embodiment of the present disclosure. FIG. 12 describes a method that is performed by an STA.

Referring to FIG. 12, in step S1201, the STA obtains CCA information. The CCA information may be obtained by a CCA operation. The CCA information is information indicating whether a wireless channel is physically available. The STA may perform a CCA operation on all operating channels. For example, the STA may perform the CCA operation starting from a PIFS time before a time point at which a backoff for obtaining a TXOP is completed. Alternatively, the CCA information may be received from an AP.

In step S1203, the STA transmits information associated with band expansion. The information associated with band expansion may be included in at least one of a preamble (e.g., the preamble 611 of FIG. 6A), an NDP (e.g., the NDP 510 of FIG. 5), or a QoS Null. For example, the information associated with band expansion may be transmitted by using an NDP or a QoS Null frame. As another example, the information associated with band expansion may be transmitted by using a preamble included in a data frame. When the information associated with band expansion is transmitted by using a preamble, the preamble may be repeatedly transmitted until a time point at which band switching is completed. The information associated with band expansion may be transmitted by using an entire communication band. The information associated with band expansion may include information indicating channels used for communication.

In step S1205, the STA transmits data based on the information associated with band expansion. The data may be transmitted by using at least one data frame (e.g., the data frames 620 and 630 of FIG. 6B). Here, the at least one data frame may be a frame including the preamble of step S1203. In other words, steps S1203 and S1205 may be performed by using the at least one data frame. The at least one data frame may further include a midamble (e.g., the midamble 640 of FIG. 6B). The data may be transmitted from a time point at which band switching is completed. The data may be transmitted by using the entire communication band.

FIG. 13 illustrates a flowchart of a band expansion procedure according to an embodiment of the present disclosure. FIG. 13 describes a procedure performed by an AP (e.g., AP 1 of FIG. 2). The procedure of FIG. 13 may correspond to the procedure of FIG. 12.

Referring to FIG. 13, in step S1301, the AP obtains CCA information. The CCA information may be obtained by a CCA operation. The CCA information is information indicating whether a wireless channel is physically available. The AP may perform a CCA operation on a primary channel. After performing the CCA operation, the AP may transmit a result of the CCA to the STA (e.g., STA 1 of FIG. 2). In other words, the AP may transmit, to the STA, information indicating whether the wireless channel is physically available.

In step S1303, the AP receives information associated with band expansion. The information associated with band expansion may be included in at least one of a preamble (e.g., the preamble 611 of FIG. 6A), an NDP (e.g., the NDP 510 of FIG. 5), or a QoS Null. For example, the information associated with band expansion may be received by using an NDP or a QoS Null frame. As another example, the information associated with band expansion may be received by using a preamble included in a data frame. When the information associated with band expansion is received by using a preamble, the preamble may be repeatedly received until a time point at which band switching is completed. The information associated with band expansion may be received by using an entire communication band. The information associated with band expansion may include information indicating channels used for communication.

In step S1305, the AP receives data based on the information associated with band expansion. The data may be received by using at least one data frame (e.g., the data frames 620 and 630 of FIG. 6B). Here, the at least one data frame may be a frame including the preamble of step S1303. In other words, steps S1303 and S1305 may be performed by using the at least one frame. The at least one data frame may further include a midamble (e.g., the midamble 640 of FIG. 6B). The data may be received from a time point at which band switching is completed. The data may be received by using the entire communication band.

In the embodiments of FIGS. 12 and 13, a plurality of preambles or a midamble may be transmitted. The plurality of preambles or the midamble may have a time length equal to or greater than the time required for an AP to switch an operating channel. In other words, a plurality of preambles or a midamble may be transmitted so that data may be transmitted after the AP switches the operating channel.

In the present disclosure, a bandwidth limitation has been assumed as an example of a power saving operation, but the power saving operation of the present disclosure is not limited thereto. The power saving operation may be an operation including at least one of a bandwidth limitation, a limitation of a strength of a transmitted signal, or a limitation of a transmission time, but is not limited to what has been described, and a power saving operation applicable by a person of ordinary skill in the art may be included in the power saving operation of the present disclosure.

The operations of the method according to the various aspects of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

In addition, the computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

While the present disclosure has been described above with reference to preferred embodiments of the present disclosure, those skilled in the art will understand that various modifications and variations may be made to the present disclosure without departing from the scope and spirit of the present disclosure, which are defined by the Claims appended hereto.

### Industrial Applicability

The present disclosure may be applied to devices and recording media in a wireless LAN system.

## Claims

1. A method for operating a station (STA) in a wireless local area network (WLAN) system, the method comprising:
obtaining information associated with a power saving operation of an access point (AP);
transmitting information associated with a band expansion operation for transmitting data by using a channel used in the power saving operation and at least one additional channel; and
transmitting data based on at least one of the information associated with the band expansion or the information associated with the power saving operation,
wherein the information associated with the power saving operation includes information on a time required for switching an operating channel of the AP, and
wherein the information associated with the band expansion includes information indicating the at least one additional channel.

2. The method of claim 1, further comprising performing a clear channel assessment (CCA) operation beginning a predetermined time prior to initiation of transmission of the information associated with the band expansion,
wherein the CCA operation is performed on the operating channel.

3. The method of claim 1, further comprising receiving a response to the information associated with the band expansion,
wherein the data is transmitted after the response is received.

4. The method of claim 1, wherein the information associated with the power saving operation is obtained by using a beacon frame or a probe response frame transmitted from the AP.

5. The method of claim 1, wherein the information associated with the power saving operation is obtained based on negotiation with the AP.

6. The method of claim 1, wherein the information associated with the band expansion is transmitted by using a control frame.

7. The method of claim 6, wherein a time length of the control frame is equal to or longer than the time required for switching the operating channel.

8. The method of claim 6, wherein the control frame includes padding, and
wherein a sum of the padding and the time length of the control frame is equal to or longer than the time required for switching the operating channel.

9. The method of claim 1, wherein the information associated with the band expansion is transmitted by using a preamble of a data frame for transmitting the data.

10. The method of claim 1, wherein the information associated with the band expansion is transmitted by using the operating channel.

11. The method of claim 1, wherein the data is transmitted by using a data frame including a preamble and a midamble, and
wherein the midamble is transmitted after the time required for switching the operating channel elapses.

12. A method for operating an access point (AP) in a wireless local area network (WLAN) system, the method comprising:
transmitting information associated with a power saving operation;
receiving information associated with band expansion that is an operation for transmitting data by using a channel used in the power saving operation and at least one additional channel;
switching an operating channel based on the information associated with the band expansion; and
receiving data based on at least one of the information associated with the band expansion or the information associated with the power saving operation,
wherein the information associated with the power saving operation includes information on a time required for switching the operating channel, and
the information associated with the band expansion includes information indicating the at least one additional channel.

13. The method of claim 12, further comprising transmitting a response to the information associated with the band expansion.

14. The method of claim 12, wherein the information associated with the power saving operation is transmitted by using a beacon frame or a probe response frame.

15. The method of claim 12, wherein the information associated with the power saving operation is transmitted by using a beacon frame or a probe response frame.

16. The method of claim 12, wherein the information associated with the power saving operation is transmitted based on negotiation for the power saving operation.

17. The method of claim 12, wherein the information associated with the band expansion is received by using a control frame,
wherein the control frame includes a padding, and
wherein a time length of the control frame is equal to or longer than the time required for switching the operating channel.

18. The method of claim 12, wherein the data is transmitted by using a data frame including at least one of a preamble or a midamble,
wherein the preamble includes the information associated with the band expansion, and
wherein the midamble is transmitted after the time required for switching the operating channel of the AP elapses.

19. A station (STA) in a wireless local area network (WLAN) system, comprising:
a transceiver; and
a processor coupled to the transceiver,
wherein the processor is configured to:
obtain information associated with a power saving operation of an access point (AP);
transmit information associated with band expansion that is an operation for transmitting data by using a channel used in the power saving operation and at least one additional channel; and
transmit data based on at least one of the information associated with the band expansion or the information associated with the power saving operation,
wherein the information associated with the power saving operation includes information on a time required for switching an operating channel of the AP, and
wherein the information associated with the band expansion includes information indicating the at least one additional channel.

20. An access point (AP) in a wireless local area network (WLAN) system, comprising:
a transceiver; and
a processor coupled to the transceiver,
wherein the processor is configured to:
transmit information associated with a power saving operation;
receive information associated with band expansion that is an operation for transmitting data by using a channel used in the power saving operation and at least one additional channel; and
switch an operating channel based on the information associated with the band expansion; and
receive data based on at least one of the information associated with the band expansion or the information associated with the power saving operation,
wherein the information associated with the power saving operation includes information on a time required for switching the operating channel, and
wherein the information associated with the band expansion includes information indicating the at least one additional channel.
